# EUROPÄISCHE PATENTSCHRIFT

(11) **EP 0 615 584 B1**
(45) Veröffentlichungstag und Bekanntmachung des Hinweises auf die Patenterteilung: **28.02.1996**
(21) Anmeldenummer: 92923331.0
(22) Anmeldetag: 09.11.1992
(51) Int. Cl.: F16D 3/60

(54) **KUPPLUNG**
CLUTCH
EMBRAYAGE

(30) Priorität: 03.12.1991 DE 4139830
(43) Veröffentlichungstag der Anmeldung: 21.09.1994
(73) Patentinhaber: CENTA Antriebe Kirschey GmbH, 42755 Haan (DE)
(72) Erfinder: Chivari, Ilie, 44628 Herne (DE)
(74) Vertreter: Weisse, Jürgen, Dipl.-Phys.
(86) Internationale Anmeldenummer: EP9202567
(87) Internationale Veröffentlichungsnummer: WO9311368

(56) Entgegenhaltungen:
- DE-A- 3 049 054
- FR-A- 843 738
- FR-A- 979 776

## Beschreibung

### Technisches Gebiet

Die Erfindung betrifft eine Kupplung zum Kuppeln achsversetzter umlaufender Teile mit einer antriebseitigen und einer abtriebseitigen Kupplungshälfte und einem teilbaren Kupplungszwischenglied, das über ein erstes Paar von zentralsymmetrisch zueinander angeordneten Lenkern mit der antriebseitigen Kupplungshälfte und über ein zweites Paar von zentralsymmetrisch zueinander angeordneten Lenkern mit der abtriebseitigen Kupplungshälfte verbunden ist, wobei das Kupplungszwischenglied von zwei bogenförmigen Zwischengliedhälften gebildet ist, so daß jede eine seitliche Öffnung bildet, die ein seitliches Abnehmen der Zwischengliedhälfte von einer zentral durch die Kupplung hindurchgehenden Welle gestattet.

### Zugrundeliegender Stand der Technik

Eine solche Kupplung ist beispielsweise bekannt durch die DE-A-30 49 054. Bei dieser bekannten Kupplung sind die zwei bogenförmigen Zwischengliedhälften des Kupplungszwischenglieds über Paßschrauben verbunden. Dies ist sehr aufwendig und es besteht die Gefahr des Lockerns dieser Schrauben.

### Offenbarung der Erfindung

Der Erfindung liegt die Aufgabe zugrunde, eine Kupplung der eingangs genannten Art konstruktiv zu vereinfachen.

Die Erfindung sieht daher eine Kupplung mit einem Kupplungszwischenglied vor, dessen bogenförmige Zwischengliedhälften über Laschen an ihren Enden mit den jeweiligen Lenkern in Verbindung stehen und nicht zusätzlich verschraubt sind.

Erfindungsgemäß wird diese Aufgabe dadurch gelöst, daß
(a) die bogenförmigen Zwischengliedhälften des Kupplunzwischenglieds
   - sich über jeweils mehr als 180° erstrecken,
   - axial gegeneinander versetzt angeordnet sind und
   - um 180° gegeneinander winkelversetzt sind, so daß die öffnung jeder Zwischengliedhälfte mit dem geschlossenen Mittelbereich der anderen Zwischengliedhälfte fluchtet,
(b) jede der Zwischengliedhälften im Bereich ihrer Enden nebeneinander jeweils eine erste und eine zweite Lasche zu beiden Seiten einer zwischen den beiden Zwischengliedhälften verlaufenden Symmetrieebene aufweisen, von denen die erste Lasche auf der Seite der öffnung und die zweite Lasche auf der Seite des geschlossenen Mittelbereichs vorgesehen ist,
(c) die ersten Laschen der einen Zwischengliedhälfte mit den zweiten Laschen der anderen Zwischengliedhälfte fluchten und umgekehrt und
(d) die Lenker an den Paaren von fluchtenden Laschen angelenkt sind.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine Ansicht einer Kupplung in Axialrichtung gesehen, wobei die Kupplungshälften, die Teile einer Maschinenanlage, z.B. eine Getriebewelle und ein Rad einer Lokomotive sein können, nicht dargestellt sind.
- Fig.2: zeigt einen Schnitt längs der Linie C - D von Fig.1.
- Fig.3: zeigt eine einzelne Zwischengliedhälfte bei der Kupplung von Fig.1 in Axialrichtung gesehen.
- Fig.4: zeigt eine zugehörige Seitenansicht.

### Bevorzugte Ausführung der Erfindung

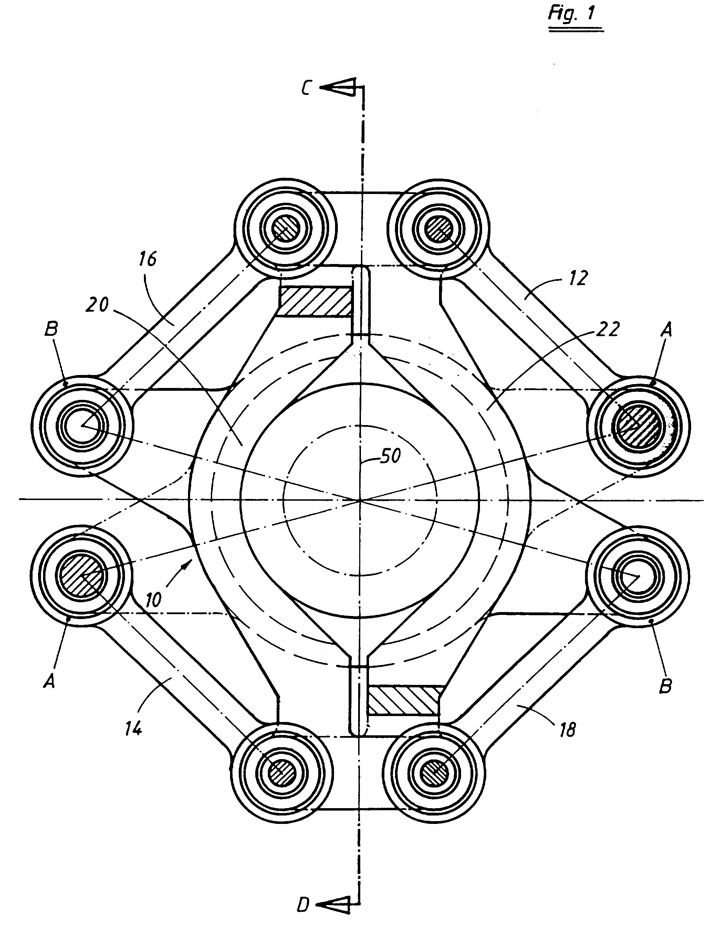

In Fig.1 ist mit 10 ein Kupplungszwischenglied einer Kupplung bezeichnet. Die Kupplung kuppelt zwei umlaufende Teile, beispielsweise eine Getriebewelle und ein Rad einer Lokomotive über eine erste Kupplungshälfte A bzw. eine zweite Kupplungshälfte B. Das Kupplungszwischenglied 10 ist über einen Lenker 12 und über einen zentralsymmetrisch zu dem Lenker 12 angeordneten Lenker 14 mit der antriebseitigen Kupplungshälfte A verbunden. Weiterhin ist das Kupplungszwischenglied 10 über einen Lenker 16 und über einen Lenker 18 mit der abtriebseitigen Kupplungshälfte β verbunden. Die Lenker 12 und 14 erstrecken sich im Uhrzeigersinn um das Kupplungszwischenglied 10. Die Lenker 16 und 18 erstrecken sich entgegen dem Uhrzeigersinn um das Kupplungszwischenglied 10. Die Kupplung gestattet einen gewissen Achsversatz zwischen antriebseitiger und abtriebseitiger Kupplungshälfte. Dabei führen die Lenker 12 bis 18 und das Kupplungszwischenglied 10 eine Ausgleichsbewegung aus.

Bei der dargestellten Kupplung besteht das Kupplungszwischenglied 10 aus zwei Zwischengliedhälften 20 und 22. Die Zwischengliedhälften 20 und 22 können nach Lösen von Schrauben radial auseinandergenommen werden. Es ist dadurch möglich, eine von einer Radachse durchsetzte Kupplung zu demontieren, ohne etwa das Rad dazu ausbauen zu müssen.

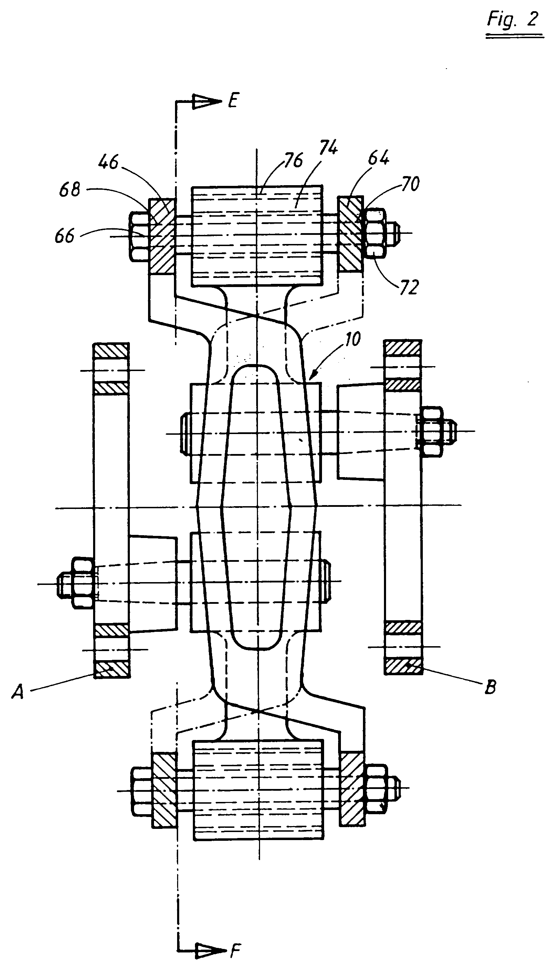

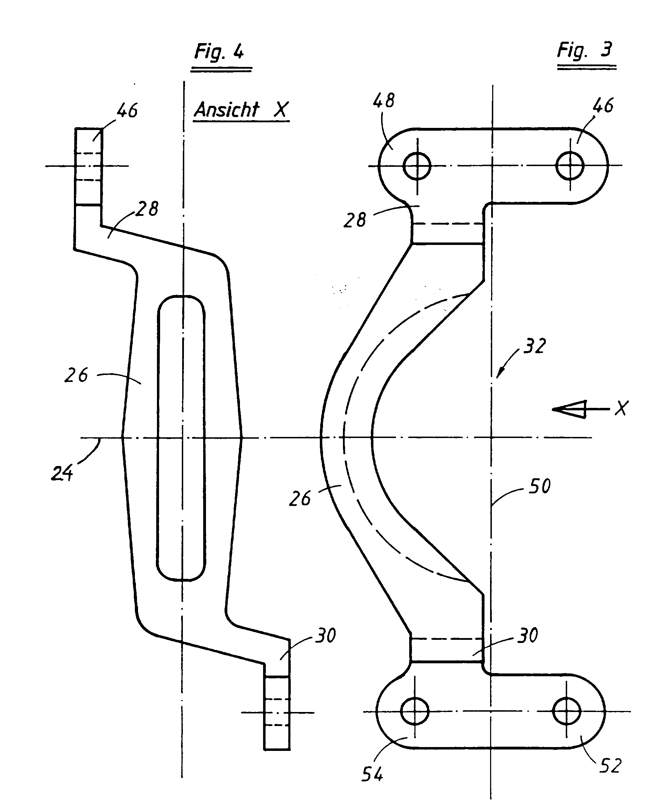

Eine Zwischengliedhälfte 22 ist in Fig.3 und 4 für sich in Axialansicht und in Seitenansicht dargestellt. Die Zwischengliedhälfte 22 erstreckt sich in Umfangsrichtung etwas über 180° um die Achse 24 herum. Die Zwischengliedhälfte 22 hat einen nach außen gewölbten Mittelbereich 26 und zwei Enden 28 und 30. Der Mittelbereich 26 bildet (rechts in Fig.3) eine öffnung 32, die ein seitliches Abnehmen der Zwischengliedhälfte von einer durch die Kupplung hindurchgeführten Welle oder Achse gestattet. An dem Ende 28 der Zwischengliedhälfte sind (links oben in Fig.4) eine erste und eine zweite Lasche 46 und 48 angeformt. Die beiden Laschen 46 und 48 liegen symmetrisch zu einer zwischen den Zwischengliedhälften 20 und 22 verlaufenden Symmetrieebene 50 (Fig.1 und 3). Die erste Lasche 46 liegt dabei auf der Seite der Öffnung 32. Die zweite Lasche 48 liegt auf der Seite des geschlossenen Mittelbereiches 26. In entsprechender Weise sind an dem Ende 30 der Zwischengliedhälfte 22 (rechts unten in Fig.4) eine erste und eine zweite Lasche 52 und 54 angeformt. Die beiden Laschen 52 und 54 liegen ebenfalls symmetrisch zu der zwischen den Zwischengliedhälften 20 und 22 verlaufenden Symmetrieebene 50. Die erste Lasche 52 liegt dabei auf der Seite der öffnung 32. Die zweite Lasche 54 liegt auf der Seite des geschlossenen Mittelbereichs 26. Die Zwischengliedhälfte 20 ist genau so aufgebaut wie die beschriebene Zwischengliedhälfte 22. Die Zwischengliedhälfte 20 ist in der Kupplung und dem Zwischenglied 10 in einer um 180° verdrehten Lage eingebaut. Dabei fluchten jeweils "erste", d.h. der öffnung benachbarte Laschen wie 46 und 52 bei der Zwischengliedhälfte 22 mit "zweiten", d.h. dem Mittelbereich benachbarte Laschen der Zwischengliedhälfte 20, die also etwa den Laschen 48 und 54 der Zwischengliedhälfte 22 entsprechen. Umgekehrt fluchten "erste", d.h. der öffnung benachbarte Laschen bei der Zwischengliedhälfte 20 mit "zweiten", d.h. dem Mittelbereich benachbarte Laschen der Zwischengliedhälfte 22. Die fluchtenden Laschen, z.B. 46 und 64 in Fig.2, liegen in axialem Abstand voneinander. Schraubbolzen 66 erstrecken sich durch Löcher 68 und 70 der Laschen 46 und 64. Die Schraubbolzen 66 sind durch Muttern 72 gehalten. Auf den Schraubbolzen 66 sitzen ringförmige Schwingmetallgelenke 74. Das sind zylindrische Gummikörper, die auf ihrer Innenfläche fest mit dem Schraubbolzen 66 verbunden und auf ihrer Außenfläche fest in einem Auge 76 des Lenkers 12 gehalten sind.

## Patentansprüche

1. Kupplung zum Kuppeln achsversetzter umlaufender Teile mit einer antriebseitigen und einer abtriebseitigen Kupplungshälfte (A bzw. B) und einem teilbaren Kupplungszwischenglied (10), das über ein erstes Paar von zentralsymmetrisch zueinander angeordneten Lenkern (12,14) mit der antriebseitigen Kupplungshälfte (A) und über ein zweites Paar von zentralsymmetrisch zueinander angeordneten Lenkern (16,18) mit der abtriebseitigen Kupplungshälfte (B) verbunden ist, wobei das Kupplungszwischenglied (10) von zwei bogenförmigen Zwischengliedhälften (20,22) gebildet ist, so daß jede eine seitliche Öffnung (32) bildet, die ein seitliches Abnehmen der Zwischengliedhälfte (20,22) von einer zentral durch die Kupplung hindurchgehenden Welle gestattet,
dadurch gekennzeichnet, daß
(a) die bogenförmigen Zwischengliedhälften (20,22) des Kupplungszwischenglieds (10)
- sich über jeweils mehr als 180° erstrecken,
- axial gegeneinander versetzt angeordnet sind und
- um 180° gegeneinander winkelversetzt sind, so daß die Öffnung (32) jeder Zwischengliedhälfte (20,22) mit dem geschlossenen Mittelbereich (26) der anderen Zwischengliedhälfte (22,20) fluchtet,
(b) jede der Zwischengliedhälften (20,22) im Bereich ihrer Enden (28,30) nebeneinander jeweils eine erste und eine zweite Lasche (46,52 bzw. 48,54) zu beiden Seiten einer zwischen den beiden Zwischengliedhälften (20,22) verlaufenden Symmetrieebene (50) aufweisen, von denen die erste Lasche (46,52) auf der Seite der öffnung (32) und die zweite Lasche (48,54) auf der Seite des geschlossenen Mittelbereichs (26) vorgesehen ist,
(c) die ersten Laschen (46,52) der einen Zwischengliedhälfte (22) mit den zweiten Laschen der anderen Zwischengliedhälfte (20) fluchten und umgekehrt und
(d) die Lenker (12,14,16,18) an den Paaren von fluchtenden Laschen angelenkt sind.

2. Kupplung nach Anspruch 1. **dadurch gekennzeichnet, daß** die Laschen (46,48) an dem einen Ende (28) jeder Zwischengliedhälfte (20,22) gegenüber den Laschen (52,54) an dem anderen Ende (30) der Zwischengliedhälfte (20,22) axial versetzt sind.

3. Kupplung nach Anspruch 2, **dadurch gekennzeichnet, daß** jeweils ein Schwenklager (74) für einen der Lenker (12,14,16,18) zwischen jedem der in axialem Abstand voneinander angeordneten Laschen (46,64) angeordnet ist.

4. Kupplung nach Anspruch 3, **dadurch gekennzeichnet,** daß die Schwenklager von ringförmigen Schwingmetallkörpern (74) gebildet sind, die mit ihrer Außenseite in einem Auge (76) des Lenkers (12) und mit ihrer Innenseite auf einem sich zwischen den Laschen (46,64) erstreckenden Lagerzapfen (66) fest gehaltert sind.

## Claims

1. Coupling device for coupling non-aligned rotating parts, having a driving-side coupling half and a driven-side coupling half (A and B, respectively), and a dividable intermediate coupling member (10), which is connected with the driving-side coupling half (A) through a first pair of mutually centro-symmetrically arranged links (12,14), and with the driven-side coupling half (B) through a second pair of mutually centro-symmetrically arranged links, the intermediate coupling member (10) being formed of two arcuate intermediate member halves (20,22), such that each one defines a lateral opening (32) which permits lateral removal of the intermediate member half (20,22) from a shaft passing centrally through the coupling,
**characterized in that**
(a) the arcuate intermediate member halves (20,22) of the intermediate coupling half (10)
- each extend through more than 180°
- are axially displaced with respect to each other, and
- are angularly spaced by 180°, such that the opening (32) of each intermediate member half (20,22) is aligned with the closed central portion (26) of the other intermediate member half (22,20),
(b) each of the intermediate member halves (20,22), in the region of its ends (28,30) has a first and a second lug (46,52 and 48,54, respectively) side by side on both sides of a symmetry plane (50) extending between the two intermediate member halves (20,22), a first lug thereof (46,52) being provided on the side of the opening (32) and the second lug (48,54) being provided on the side of the closed central portion (26),
(c) the first lugs (46,52) of one intermediate member half (22) being aligned with the second lugs of the other intermediate member half (20) and vice versa, and
(d) the links (12,14,16,18) being pivoted on pairs of aligned lugs.

2. Coupling device as claimed in claim 1, **characterized in that** the lugs (46,48) at one end (28) of each intermediate coupling half (20,22) are axially offset with respect to the lugs (52,54) at the other end (30) of the intermediate coupling half (20,22).

3. Coupling device as claimed in claim 2, **characterized in that** a respective pivot bearing (74) for one of the links (12,14,16,18) is arranged between each of the axially spaced lugs (46,64).

4. Coupling device as claimed in claim 3, **characterized in that** the pivot bearings are annular ruber-bonded-metal bodies (74), which, at their outer sides, are firmly held in eyes (76) of the links (12) and, with their inner sides, are firmly held on pivot pins (66) extending between the lugs (46,64).

## Revendications

1. Dispositif d'accouplement destiné à accoupler des éléments rotatifs décalés axialement, muni d'un demi-accouplement (A et B respectivement) du côté d'entraînement et d'un demi-accouplement du côté de dérive et d'un membre intermédiaire d'accouplement (10) divisible qui est relié, par une première paire de bielles (12,14) disposées à symétrie centrale l'une par rapport à l'autre, au demi-accouplement (A) du côté d'entraînement et, par une seconde paire de bielles (16,18) disposées à symétrie centrale l'une par rapport à l'autre, au demi-accouplement (B) du côté de dérive, le membre intermédiaire d'accouplement (10) étant formé de deux moitiés de membre intermédiaire (20,22) en forme d'arc si bien que chacune forme une ouverture (32) latérale permettant d'enlever latéralement la moitié de membre intermédiaire (20,22) d'un arbre passant centralement à travers le dispositif d'accouplement,
**caractérisé par le fait que**
(a) les moitiés de membre intermédiaire (20,22) en forme d'arc du membre intermédiaire d'accouplement (10)
- s'étirent sur chaque fois plus de 180°,
- sont disposées de façon axialement décalée l'une par rapport à l'autre et
- sont décalées l'une par rapport à l'autre d'un angle de 180° si bien que l'ouverture (32) de chaque moitié de membre intermédiaire (20,22) est alignée sur le domaine central fermé (26) de l'autre moitié de membre intermédiaire (22,20),
(b) chacune des moitiés de membre intermédiaire (20,22) présentent, dans le domaine de ses extrémités (28,30), chaque fois l'une à côté de l'autre une première et une seconde éclisse (46,52 et 48,54 respectivement) des deux côtés d'un plan de symétrie (50) s'étendant entre les deux moitiés de membre intermédiaire (20,22), éclisses dont la première (46,52) est prévue sur le côté de l'ouverture (32) et la seconde (48,54) sur le côté du domaine central fermé (26),
(c) les premières éclisses (46,52) d'une moitié de membre intermédiaire (22) sont alignées sur les secondes éclisses de l'autre moitié de membre intermédiaire (20) et inversement et
(d) les bielles (12,14,16,18) sont articulées aux paires d'éclisses alignées.

2. Dispositif d'accouplement selon la revendication 1, **caractérisé par le fait que** les les éclisses (46,48) sont axialement décalées à une extrémité (28) de chaque moitié de membre intermédiaire (20,22) par rapport aux éclisses (52,54) à l'autre extrémité (30) de la moitié de membre intermédiaire (20,22).

3. Dispositif d'accouplement selon la revendication 2, **caractérisé par le fait que** chaque fois un palier de pivotement (74) est disposé pour une des bielles (12,14,16,18) entre chacune des éclisses (46,64) disposées à un écart axial l'une de l'autre.

4. Dispositif d'accouplement selon la revendication 3, **caractérisé par le fait que** les paliers de pivotement sont formés de corps caoutchouc-métal (74) en forme d'anneau qui sont fixés avec leur face extérieure dans un oeil (76) de la bielle (12) et avec leur face intérieure sur un tourillon (66) s'étirant entre les éclisses (46,64).
